# FASCICULE DE BREVET EUROPEEN

(11) **EP 0 530 098 B1**
(45) Date de publication et mention de la délivrance du brevet: **07.05.1997**
(21) Numéro de dépôt: 92402341.9
(22) Date de dépôt: 26.08.1992
(51) Int. Cl.: H04Q 11/04, H04Q 3/00

(54) **Agencement et procédé de communication entre unités d'une installation de communication**
Verfahren und Anordnung für Nachrichtenübertragung zwischen Geräten einer Kommunikationsanlage
Method and arrangement for communication between units of a communication installation

(30) Priorité: 29.08.1991 FR 9110736
(43) Date de publication de la demande: 03.03.1993
(73) Titulaire: ALCATEL BUSINESS SYSTEMS, F-75008 Paris (FR)
(72) Inventeur: Gass, Raymond, F-67150 Bolsenheim (FR); Ruhlmann, André, F-67440 Marmoutier (FR)
(74) Mandataire: Schaub, Bernard

(56) Documents cités:
- EP-A- 0 073 078
- EP-A- 0 468 442
- US-A- 4 757 497
- INTERNATIONAL SWITCHING SYMPOSIUM - SESSION 21B PAPER 4 Septembre 1981,
- MONTREAL (CA) pages 1 - 6 DURET ET AL 'Experimental Nodal Switching System'
- TRANSACTIONS OF THE IECE OF JAPAN vol. E-68, no. 2, Février 1985, TOKYO (JP) pages 59 - 64 AKIYAMA ET AL 'Mesh Type Distributed Packet Switching Systems'

## Description

L'invention concerne un agencement et un procédé de communication entre unités, supports de mode circuit et interconnectées en point-à-point, du coeur d'une installation de communication.

La demande de brevet français 9009442 décrit un réseau d'interconnexion pour coeur d'installation de communication numérique, par exemple de type à intégration de services, dans lequel les unités constitutives du coeur sont interconnectées par des liaisons en point-à-point qui sont agencées en fonction de leurs besoins spécifiques.

Un tel réseau d'interconnexion comporte par exemple un sous-réseau relatif aux unités supports de mode circuit du coeur d'installation numérique, c'est-à-dire celles qui interviennent directement ou indirectement dans ce coeur à l'occasion de la commutation temporelle synchrone d'informations successivement transférées sous forme de blocs binaires de mêmes dimensions, un bloc étant couramment constitué par un octet et la récurrence de transfert étant de 125 µs, dans le cas classique d'une commutation de circuits à 64 kbit/s.

Ceci permet le transfert d'informations structurées à 8 kHz, notamment une transmission de la parole ou de signaux audiofréquence dûment échantillonnés et codés sous forme d'octets, ainsi que la transmission de données, elles aussi présentées sous forme d'octets.

Les unités concernées sont habituellement les diverses unités de type téléphonique, leurs unités de commande et éventuellement des unités auxiliaires associées.

Les unités téléphoniques sont par exemple du type coupleur d'interface pour postes téléphoniques analogiques, coupleur d'interface correspondant au niveau SO/TO ou au niveau S2/T2 selon le CCITT, ou encore à un niveau particulier choisi.

Le document EP-A-0073078 décrit aussi un agencement de communication entre des modules, supports de mode circuit, d'une installation de communication qui sont interconnectés par des liaisons point-à-point formant un sous-réseau de communication où toutes les liaisons sont structurées physiquement et régies temporellement de manière identique.

Chaque module est prévu relié à d'autres modules par des liaisons point-à-point et à des postes et/ou terminaux, qui lui sont rattachés, par des liaisons multiplexes temporelles. Ceci lui permet d'assurer la diffusion d'informations à destination d'au moins un autre module et la commutation des octets parvenant par l'intermédiaire de canaux temporels des liaisons point-à-point au cours d'une trame, ceci sous le contrôle d'une unité de commande qui lui est propre.

L'invention propose donc un agencement de communication pour une installation où les modules sont dénommés unités, supports de mode circuit. Ces unités, dotées de processeurs de commande individuelles sont interconnectées en point-à-point au niveau du coeur de l'installation composé d'au plus "n" unités.

Les liaisons point-à-point entre unités forment un sous-réseau de communication où toutes les liaisons sont structurées physiquement et régies temporellement de manière identique, chaque unité prévue pour être reliée à des liaisons point-à-point pour son interconnexion à au moins une autre unité est aussi prévue pour être reliée à des liaisons multiplexes temporelles de desserte de postes et/ou terminaux de communication, de manière à permettre tant la diffusion d'informations vers au moins une autre unité que la commutation d'octets parvenant par les liaisons point-à-point.

Selon une caractéristique de l'invention, toute unité du coeur d'installation comporte un circuit de communication, de type circuit intégré, qui est identique pour toutes les unités quel qu'en soit le type, unité de commande, unité auxiliaire ou coupleur pour postes téléphoniques et/ou terminaux de communication, chaque circuit de communication comportant "n" ports de raccordement pour liaison point-à-point et "q" ports pour liaison multiplexe temporelle de desserte des postes et/ou terminaux rattachés à l'unité comportant le circuit de communication considéré et des éventuels circuits spécialisés concernés de cette unité, ledit circuit de communication assurant, sous le contrôle d'un microprocesseur associé, d'une part, la diffusion des informations, à destination d'au moins une autre unité, qui sont susceptibles d'être transmises au cours de chaque trame de durée "T" sous forme d'octets par les "r" canaux temporels de liens entrants de chacune des "q" liaisons multiplexes temporelles reliées à lui, vers éventuellement ses "n" ports de raccordement de liaison point-à-point et assurant éventuellement, d'autre part, la commutation des octets parvenant par certains de "r x q" canaux temporels quelconques sélectionnés parmi les "p x n" canaux temporels susceptibles de lui être fournis, par les liaisons point-à-point au cours d'une trame de durée "T".

L'invention propose aussi un procédé de communication entre unités, supports de mode circuit interconnectées en point-à-point, du coeur d'une installation de communication composée d'au plus "n" unités où les liaisons point-à-point entre unités forment un sous-réseau de communication où toutes les liaisons sont structurées physiquement et régies temporellement de manière identique, chaque unité, prévue pour être reliée à des liaisons point-à-point pour son interconnexion à au moins une autre unité et à des liaisons multiplexes temporelles de desserte de postes et/ou terminaux de communication, comportant un circuit de communication, de type circuit intégré, qui est identique pour toutes les unités quel qu'en soit le type, unité de commande, unité auxiliaire ou coupleur pour postes téléphoniques et/ou terminaux de communication, chaque circuit de communication comportant "n" ports de raccordement pour liaison point-à-point et "q" ports pour liaison multiplexe temporelle de desserte des postes et/ou terminaux.

Selon une caractéristique de l'invention, chaque trame successive de durée "T", identique pour les liaisons point-à-point entre unités, supports de mode circuit, et pour les liaisons multiplexes temporelles de desserte des postes et/ou terminaux en mode circuit rattachés à l'installation au niveau d'une unité ou de desserte de circuits spécialisés correspondants, est identiquement divisée en "r x q" intervalles de temps égaux sur chacune des liaisons point-à-point reliant deux unités supports de mode circuit de l'installation, "r" étant égal au nombre de canaux temporels sur une liaison multiplexe temporelle et ·"q" étant le nombre de ces liaisons multiplexes temporelles par circuit de communication.

L'invention, ses caractéristiques et ses avantages sont précisés dans la description qui suit, en liaison avec les figures répertoriées ci-dessous.

la figure 1 présente un schéma de principe d'un réseau d'interconnexion pour coeur d'installation de communication.

La figure 2 présente un schéma de principe d'un sous-réseau d'interconnexion, relatif aux unités traitant les informations en mode circuit.

la figure 3 présente un exemple de structure de trame pour liaisons de sous-réseau d'interconnexion relatif au mode circuit.

la figure 4 présente un schéma de raccordement d'un circuit de communication pour sous-réseau d'interconnexion tel que défini en relation avec la figure 2.

La figure 5 présente un exemple de structure interne pour un circuit de communication selon la figure 4.

La figure 6 présente un schéma partiel relatif au sous-réseau de la figure 2.

La figure 7 présente un diagramme relatif au procédé de communications entre unités de commande et coupleurs d'un sous-réseau selon la figure 2.

Les figures 8, 9, 10 présentent respectivement des exemples de structure pour lien temporel reliant un terminal numérique émetteur à une interface de raccordement pour de tels terminaux, pour lien multiplex temporel reliant une interface à un circuit de communication et pour liaison entre circuits de communication d'unités différentes.

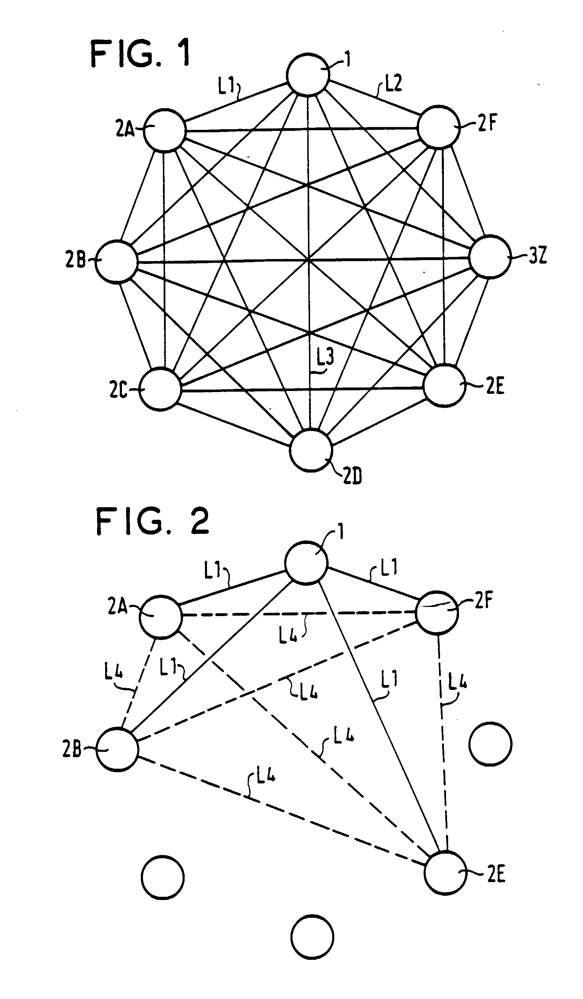

Le réseau d'interconnexion pour coeur d'installation de communication présenté en figure 1 est destiné à relier, entre elles, les unités constitutives d'une installation de communication, notamment une installation d'intercommunication ou un commutateur téléphonique, de type numérique à intégration de services (RNIS).

Ces unités constitutives sont pratiquement aménagées sur des cartes porteuses individuelles, non représentées, qui sont regroupées à l'intérieur d'une même structure, de type armoire ou coffret, où se situe donc le coeur d'une installation.

Ces cartes porteuses sont interconnectées par l'intermédiaire d'un réseau d'interconnexion réalisé au niveau d'une carte, dite de fond de panier, non représentée, sur laquelle sont réalisées les liaisons d'interconnexion et à laquelle les cartes porteuses viennent se connecter au niveau de positions de cartes comportant des organes de connexion appropriés.

Une installation de communication comporte classiquement au moins une carte pour une unité de commande 1 habituellement organisée autour d'au moins un processeur, muni de mémoires mortes et/ou vives, ces divers éléments constitutifs bien connus de l'homme de métier, n'étant pas représentés ici.

Une installation de communication, telle qu'ici envisagée, comporte aussi des cartes individuelles pour des unités d'entrée-sortie ou coupleurs 2, tels ceux référencés 2A à 2F, destinés à assurer la transmission généralement bidirectionnelle d'informations entre des instruments de communication, tels que des postes, des terminaux, des serveurs ou tout autre équipement utilisateur ou fournisseur.

Ces instruments de communication connus qui ne sont pas figurés ici, sont susceptibles d'être rattachés, comme il est connu, soit directement à l'installation considérée par exemple par des liaisons filaires, soit indirectement par l'intermédiaire des liaisons qui relient l'installation aux autres installations, auxquelles ces instruments sont alors directement rattachés.

Les dites autres installations et leurs liaisons d'interconnexion qui ne sont pas directement concernées par la présente invention, ne sont ni figurées ni décrites ici; il en est de même pour les liaisons reliant les coupleurs 2, d'une part aux instruments de communication qui leur sont éventuellement rattachés dans l'installation considérée, d'autre part aux autres installations.

L'installation de communication, ici envisagée, comporte éventuellement une carte d'unité auxiliaire 3, telle 3Z, destinée à assister une ou plusieurs autres unités en assurant une même fonction pour elle(s), par exemple une opération spécifique de transcodage nécessaire tant au(x) coupleur(s) 2 transmettant les informations à transcoder qu'à l'unité de commande 1 chargée de la supervision des opérations relatives à ces informations dans l'installation.

De telles cartes d'unités auxiliaires 3 sont aussi susceptibles d'être prévues lorsqu'une seule carte ne suffit pas à porter une unité 1 ou 2, comme cela est connu.

Chaque unité 1, 2 ou 3 d'une installation composée de "n" unités est reliée par une liaison physique point-à point à chacune des autres unités.

Chaque liaison point-à-point entre deux unités, telle la liaison L1 entre l'unité de commande 1 et le coupleur 2A, est prévue adaptée aux besoins spécifiques des deux unités concernées et peut, si besoin est, être constituée et gérée de manière totalement différente des autres liaisons de l'installation, telles par exemple L2 entre les unités 1 et 3Z ou L3 entre les unités 1 et 2D.

Une même unité est susceptible d'être reliée à plusieurs liaisons différemment constituées et/ou gérées, sachant que dans la pratique le nombre de liaisons différentes réellement exploitées par une même unité est limité par rapport au nombre de liaisons dont elle peut disposer.

En conséquence, il est possible de considérer le réseau d'interconnexion entre unités comme composé de sous-réseaux reliant chacun les unités-participant à la mise en oeuvre d'un service différent, par exemple un sous-réseau support de mode circuit comme ici proposé et un sous-réseau support de mode paquet.

Les unités exploitées pour un même service sont alors interconnectées par des liaisons qui sont identiques pour un même type d'information, par exemple de type signalisation.

Les unités d'un sous-réseau concernées par un même type d'information, qui sont reliées en point-à-point par des liaisons identiques, forment elles-mêmes un sous-ensemble susceptible de coopérer avec un sous-ensemble distinct, concerné par un autre type d'information, ou éventuellement avec plusieurs autres sous-ensembles dans le sous-réseau considéré pour la mise en oeuvre du service spécifiquement assuré par ce sous-réseau.

Les unités et en particulier l'unité de commande 1, qui participent à la transmission d'informations de type différents dans un même sous-réseau et/ou à la mise mise en oeuvre de services différents dans une même installation, sont alors individuellement reliées à un nombre correspondant de sous-ensembles et/ou de sous-réseaux différents.

Le sous-réseau schématiquement présenté en figure 2 est supposé prévu pour la mise en oeuvre d'un service de transmission d'informations en mode circuit, entre unités d'un coeur d'installation de communication.

Il associe au moins une unité de commande à des unités plus directement téléphoniques qui comprennent par exemple un coupleur d'interface pour postes téléphoniques analogiques, ici référencé 2A, un coupleur d'interface de niveau SO/TO selon les normes CCITT, qui est référencé 2B, un coupleur d'interface de niveau S2/T2 selon les mêmes normes CCITT, qui est référencé 2E, ou encore un coupleur d'interface standard donné, symbolisé par 2F.

Toutes ces unités sont amenées à transférer entre elles, dans l'installation, des informations en mode circuit telles que définies ci-dessus et elles sont desservies par des liaisons point-à-point identiques, référencées L1 ou L4, ces dernières étant représentées en tireté sur la figure 2.

Les unités interconnectées par les liaisons L1 forment un premier sous-ensemble qui constitue le sous-réseau de transfert d'information en mode circuit avec le sous-ensemble des unités reliées par les liaisons L4.

Ces liaisons L1 et L4 sont bidirectionnelles et sont régies par une structure identique de trame, elles se différencient essentiellement par le fait que les unes, référencées L1, sont essentiellement destinées à la transmission bidirectionelle de signalisation entre les coupleurs, d'une part, et la ou les unités de commande, d'autre part, alors que les autres sont essentiellement destinées au transfert des informations, de type parole ou données, en mode circuit.

Pour les unes et les autres, chaque trame est divisée en "p" intervalles de temps égaux et permet un transfert d'informations par l'intermédiaire de "p" canaux ayant un débit unitaire de 64 kbit/s, "p" étant par exemple égal à 128.

La constitution de ces liaisons L1 et L4 est identique, chacune comportant quatre pistes conductrices, les deux pistes conductrices externes servant ici de liaisons de masse de part et d'autre de deux pistes conductrices centrales de transmission numérique unidirectionelle, de sens inverse l'une de l'autre.

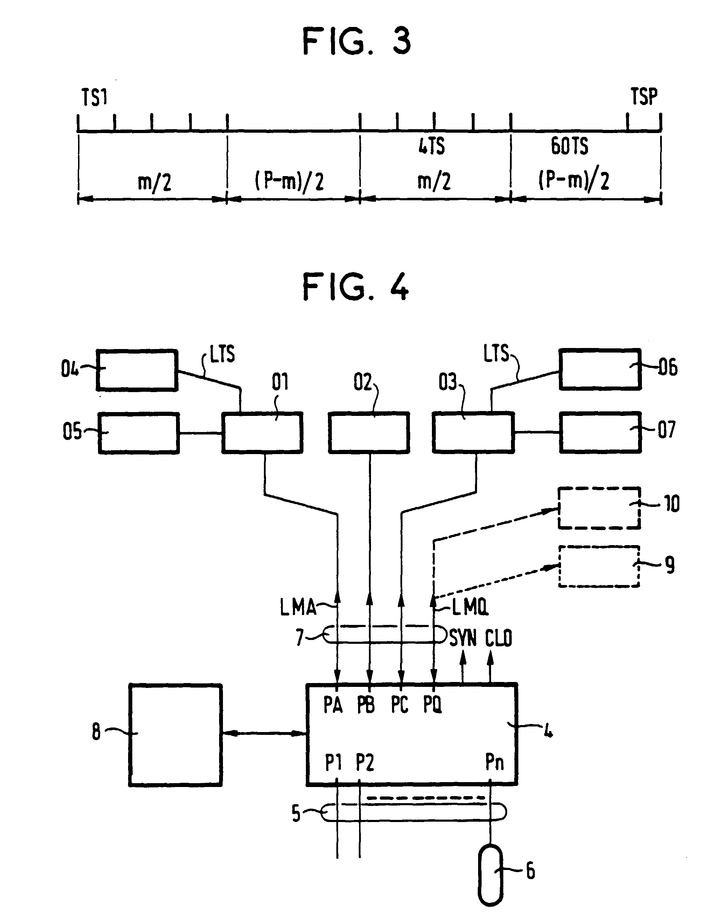

Dans une forme de réalisation schématisée en figure 3, "m" intervalles de temps de chaque trame sont affectés aux transferts d'octets de signalisation, soit essentiellement entre coupleurs 2 et unité(s) de commande 1, via les liaisons L1, les "p-m" autres intervalles de temps étant affectés au transfert des informations soit essentiellement entre coupleurs, via les liaisons L4, le nombre "m" étant un nombre entier nettement inférieur au nombre "p".

A titre d'exemple, les "m/2" premiers intervalles de temps de chaque trame sont réservés à des transferts d'octets de signalisation entre unité(s) de commande et coupleurs, ils sont immédiatement suivis de "(p-m)/2" intervalles de temps réservés à des transferts d'octets d'information entre coupleurs, qui sont eux-mêmes suivis de "m/2" intervalles de temps réservés à des transferts de signalisation entre coupleurs et unité(s) de commande, les "(p-m)/2" intervalles de temps restant étant eux aussi impartis à des transferts d'octets d'information entre coupleurs.

Selon une forme préférée de réalisation, toutes les unités 1, 2 et éventuellement 3 d'un sous-réseau relatif à la transmission d'informations en mode circuit dans une installation sont identiquement dotées d'un même circuit de communication 4, préférablement de type intégré, pour leurs échanges d'information par l'intermédiaire de ce sous-réseau.

Un schéma synoptique d'un tel circuit de communication 4 est présenté figure 4, il montre que chaque circuit de communication 4 est prévu pour être relié à un microprocesseur 8 chargé de le superviser dans l'unité qui le comporte.

Un circuit de communication 4 comporte "n" ports, tels P1, P2 ...Pn, de raccordement individuel d'un faisceau 5 de "n" liaisons point-à-point L4 ou L1 pour ses échanges de données, soit avec les circuits de communication 4 correspondants des autres unités de l'installation, soit éventuellement avec lui-même, l'entrée d'un de ces "n" ports étant bouclée sur sa propre sortie, ici par un bouclage 6 réalisé au niveau du port Pn.

Le bouclage s'effectue par exemple au niveau de la position où vient se raccorder la carte comportant le circuit de communication considéré, c'est-à-dire sur la carte de fond de panier où les diverses liaisons point-à-point entre unités de l'installation considérée sont réalisées.

Un circuit de communication 4 comporte aussi "q" ports tels PA, PB, PC ou PQ, de raccordement de liaisons multiplexes temporelles bidirectionnelles référencées de LMA à LMQ qui déterminent un faisceau 7 desservant l'unité qui comporte ce circuit.

Ces liaisons qui sont par exemple au nombre de quatre dans la réalisation envisagée, sont de type classique à trente deux canaux temporels et permettent la desserte d'interfaces de raccordement de ligne ou d'abonnés, référencés 01, 02, 03, et de circuits spécialisés, référencés 9, 10.

Les interfaces de raccordement sont par exemple des modules de ligne pour des terminaux d'abonné, tels que 04 et 05, raccordés à l'installation à un niveau S0 ou T0 tel que défini par le CCITT, des modules de ligne pour postes analogiques tels que 06 et 07, etc ....

Les circuits spécialisés sont par exemple un générateur de tonalité 10 dans le cas d'une unité desservant des terminaux téléphoniques d'abonné, et/ou un processeur de traitement de signal 9 dans le cas d'une unité ayant à traiter des signalisations multifréquences et/ou des signaux transmis sous forme de tonalités.

Additionnellement un circuit de communication 4 comporte un circuit d'horloge, non représenté, qui lui permet d'extraire des signaux d'horloge CLO et de synchronisation SYN des signaux qu'il reçoit lui-même, par exemple via une des liaisons auxquelles il est raccordé, et cela au bénéfice des circuits et interfaces de raccordement contenus ou desservis par l'unité qui le comporte.

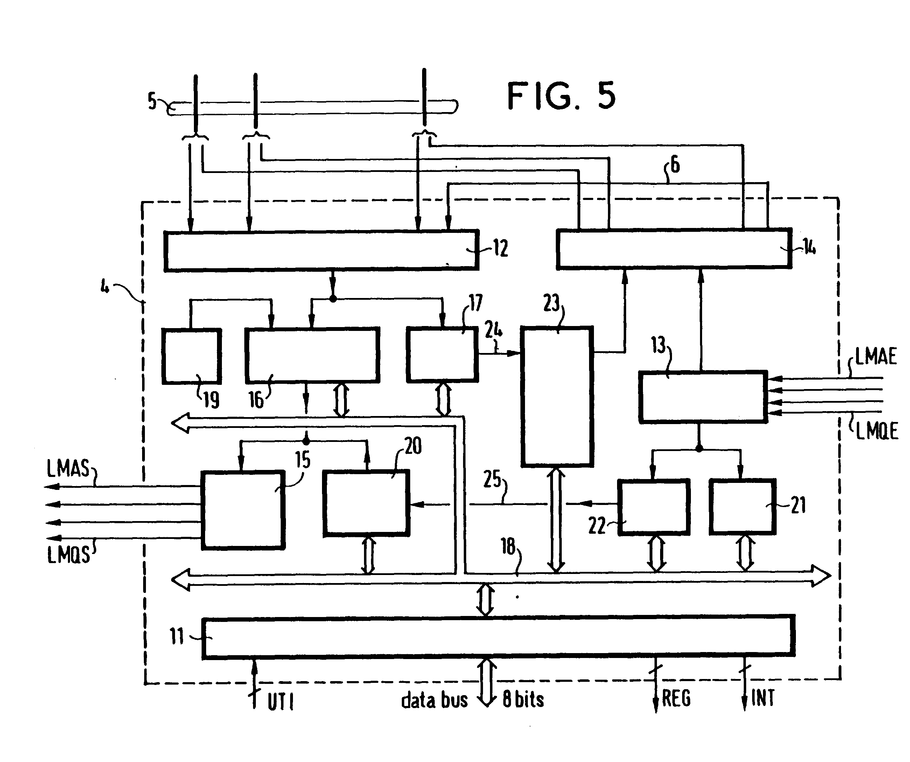

Le circuit de communication 4 de la figure 4 est développé en figure 5, il comporte une interface 11 permettant de le relier au microprocesseur 8, des interfaces d'entrée 12 et 13, respectivement pour les liens unidirectionnels entrants des liaisons L4 ou L1 du faisceau 5 qui le dessert et pour ceux des liaisons référencées de LMAE à LMQE du faisceau 7 qui le dessert également; deux interfaces de sortie 14 et 15 relient aussi ce circuit aux liens unidirectionnels sortants des liaisons du faisceau 5 pour l'une et du faisceau 7 pour l'autre, ces derniers étant référencés LMAS à LMQS sur la figure 5.

L'interface 11 prévue pour un microprocesseur 8 dans un circuit de communication 4 est de conception connue elle permet notamment la connexion du circuit de communication au bus de données que comporte le microprocesseur 8, l'envoi d'interruptions et de demandes de transmission de données à ce microprocesseur, via des liens spécialisés, ici référencés INT et REQ, la réception d'ordre de sélection, d'écriture, de lecture, de remise à l'état initial, de test..., ici symbolisés par un lien référencé UTI.

L'interface d'entrée 12 reçoit et met en phase de manière connue en soi les signaux numériques provenant simultanément des liens entrants des différentes liaisons du faisceau 5, elle assure aussi un multiplexage des octets provenant des liens entrants transmettant réellement vers l'unité qui la comporte, après préférablement une mise sous forme parallèle des éléments binaires reçus en série pour chacun de ces octets.

Ces octets sont transmis soit à un module de commutation temporelle 16 en vue de leur transmission par l'intermédiaire des liaisons multiplexes temporelles sortantes du faisceau 5, soit à un automate de traitement de signalisation 17, suivant leurs destinations respectives.

Le module de commutation temporelle 16 est inséré entre l'interface d'entrée 12 et l'interface de sortie 15.

Il est par exemple du type décrit dans la demande de brevet français 91 02623 et il permet notamment de mettre en liaison l'un quelconque des canaux temporels des liens entrants des liaisons du faisceau 5 avec l'un quelconque des "r x q" canaux temporels sortants des liaisons multiplexes temporelles du faisceau 7.

Dans l'exemple de réalisation envisagé plus haut, le nombre de canaux entrants susceptibles d'être traités par un module de commutation temporelle 16 est égal à 4096 et permet la desserte d'un faisceau 5 de liens entrants de trente liaisons L4 ou L1, dans lequel chaque lien comporte 128 canaux temporels, et de deux liens internes représentant ensemble 256 canaux temporels entrants directement exploités par le circuit de communication lui-même; les nombres "q" de liaisons multiplexes de faisceau 7 et "r" de canaux temporels y sont prévus respectivement égaux à 4 et 32.

Dans la réalisation envisagée, une partie des canaux temporels réservés à l'unité en entrée de module de commutation est affectée aux octets transmis par le bouclage 6, une autre partie étant susceptible d'être affectée à l'émission d'octets prédéterminés par un automate 19 servant à assurer une commande par états, notamment de terminaux d'abonnés, par l'intermédiaire des canaux temporels des liens unidirectionnels sortants LMAS à LMQS qui les desservent.

La commande d'un tel module de commutation est par exemple du type à adressage de mémoire de commande par son contenu, tel que décrit dans la demande de brevet français 91 06654.

L'automate de traitement de signalisation 17, qui est par exemple du type réseau logique programmé, prend en compte les messages provenant d'une unité de commande, telle que 1, de l'installation au profit de l'unité qui comporte le circuit de commutation 4 considéré.

Le module de commutation temporelle 16 et l'automate 17, dit récepteur, sont pilotés par le microprocesseur 8 en fonction du programme affecté à ce dernier et des messages provenant, pour l'unité qui les comporte, de la ou des unités de commande de l'installation.

A cet effet le microprocesseur 8 accède par un bus 18 au module de commutation temporelle 16, à l'automate récepteur de signalisation 17 et à d'autres éléments constitutifs du circuit de communication 4, via l'interface 11.

Selon une variante optionnelle de réalisation, un automate de transmission de message de commande 20 est prévu relié en entrée de l'interface de sortie 15, en parallèle avec le module de commutation temporelle 16, pour permettre une injection directe de messages par le microprocesseur 8 sur les liens unidirectionnels sortants LMAS à LMQS, en court-circuitant alors le module de commutation 16.

L'interface d'entrée 13 est agencée de manière connue pour recevoir les données provenant des liens unidirectionnels entrants LMAE à LMQE des liaisons multiplexes temporelles du faisceau 7, en vue du transfert des octets reçus des différents canaux temporels soit vers l'interface de sortie 14, soit vers le microprocesseur 8 par l'intermédiaire d'un automate de traitement de signalisation.

Les octets, usuellement de parole ou de données, transmis par les liens LMAE à LMAS à l'interface de sortie 14 sont au moins potentiellement susceptibles d'être diffusés par cette dernière vers toutes les unités de l'installation qui sont reliées au circuit de communication 4 considéré par une liaison du faisceau 5 et vers ce circuit de communication 4 par le bouclage 6, constitué par un simple lien.

A cet effet, l'interface de sortie 14 assure un stockage temporaire des octets à transmettre de manière à ce que ces octets soient émis au cours d'intervalles de temps de canaux temporels prédéterminés sur les liens sortants des liaisons du faisceau 5, par exemple sous le contrôle du circuit d'horloge, non représenté du circuit de communication 4 dont cette interface de sortie fait partie.

Chaque octet, arrivant à l'interface de sortie 14 par un lien entrant d'une des liaisons multiplexes temporelles LMAE à LMAS au cours d'un intervalle de temps de rang déterminé, est susceptible d'être transmis par diffusion sur toutes les liaisons du faisceau 5, au cours d'un intervalle de temps lui aussi de rang déterminé, succédant à celui de son arrivée dans un délai inférieur à la durée d'une trame "T", soit ici 125 µs.

Les octets de signalisation transmis par les liens entrants LMAE à LMAS sont susceptibles de correspondre à des observations, ou indications, traduites sous forme d'états, ils sont alors transmis au microprocesseur 8 par l'intermédiaire d'un automate de prétraitement d'états 21, relié à d'une part à l'interface d'entrée 13 et d'autre part au bus 18 d'accès au microprocesseur 8.

Dans la variante optionnelle de réalisation déjà évoquée plus haut, un automate de réception de message de commande 22 est aussi interconnecté entre l'interface d'entrée 13 et le microprocesseur 8, via le bus 18 pour ce dernier, afin de prétraiter au profit de ce microprocesseur 8, les signalisations de type message que sont susceptibles d'exploiter certaines unités, par exemple certains coupleurs de terminaux particuliers.

Le circuit de communication 4 comporte encore un automate de traitement de signalisation 23 pour produire les messages que le processeur 8 est susceptible d'émettre vers une unité de commande 1 de l'installation.

Cet automate 23, dit émetteur, est relié à cet effet d'une part au bus 18, d'autre part à l'interface de sortie 14, en parallèle avec l'interface d'entrée 13 en ce qui concerne cette interface de sortie.

Chaque octet de message du microprocesseur 8 d'une unité de l'installation à destination d'une unité de commande 1 de cette installation est susceptible d'être diffusé au cours d'un même intervalle de temps sur toutes les liens sortants des liaisons du faisceau 5,le plus souvent il n'est en fait transmis que sur les liens sortants desservant des unités susceptibles d'être concernées, qui seuls sont activés.

L'automate 17 récepteur et l'automate 23 émetteur, l'un et l'autre, de messages communiquent entre eux par un lien 24, de même que le font les automates 22 et 20 par un lien 25, ces liens 24 et 25 permettant une action de chaque automate récepteur sur l'automate émetteur correspondant, notamment lorsque la réception d'un octet par un automate récepteur 17 ou 22 conditionne l'émission d'un octet par l'automate émetteur 20 ou 23 correspondant.

Comme indiqué plus haut les échanges sur les liaisons L1 et L4, s'effectuent par l'intermédiaire des "p" canaux correspondants aux "p" intervalles TS1 à TSp de temps de trame - figure 3 - sur chacune de ces liaisons. Dans un exemple de réalisation, les transmissions des coupleurs vers les unités de commande et les transmissions de sens inverse sur les liaisons L1, s'effectuent dans des intervalles de temps réservés différents, les "m/2" premiers intervalles de temps de chaque trame servant aux émissions des uns et les "m/2" premiers intervalles de temps après chaque demi-trame servant aux émissions des autres.

Tout envoi d'information d'une unité de commande à un coupleur ou réciproquement est précédée d'une demande d'accès faite par l'envoyeur au destinataire, qu'il veut atteindre.

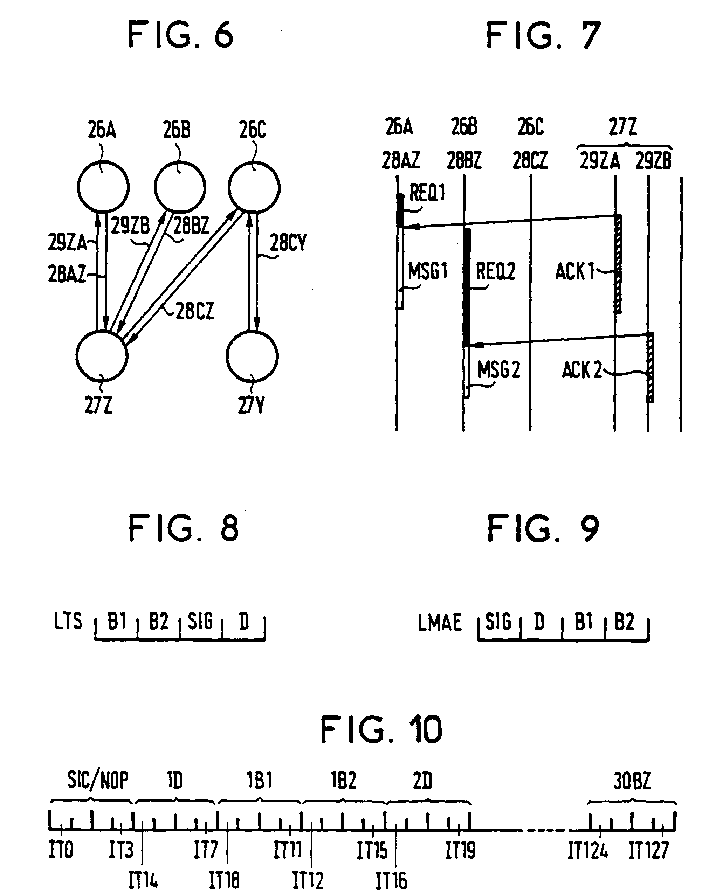

Sur la figure 6 sont représentés trois envoyeurs potentiels 26A, 26B, 26C et deux récepteurs 27Y et 27Z, par exemple trois coupleurs et deux unités de commande ou réciproquement.

Comme on l'a vu, ces coupleurs et ces unités de commande sont interconnectés par des liaisons en point-à-point, de type L1, dans la mesure où ils ont à communiquer entre eux.

Dans l'exemple proposé, l'un des deux liens d'une liaison de type L1 permet la transmission des demandes d'accès d'un envoyeur situé à une extrémité de ce lien vers l'autre extrémité où se situe le destinataire, par exemple le lien 28AZ de 26A vers 27Z ou le lien 28CY de 26C vers 27Y.

Tout envoyeur désireux de transmettre une information à un destinataire lance préalablement une demande d'accès à ce dernier dans le canal temporel qui lui est réservé en fonction de son type, c'est-à-dire ici suivant qu'il est une unité de commande ou un coupleur, sur le lien qui l'unit à ce destinataire pour ses émissions.

Cette demande d'accès, telle REQ1 émise par l'envoyeur 26A vers le destinataire 27Z sur le lien 28AZ, est par exemple constituée par un octet particulier ou par plusieurs.

L'émission d'une demande d'accès s'effectue dans le canal temporel réservé à l'envoyeur, ici en fonction de son type, comme indiqué plus haut, les mêmes intervalles de temps de trame étant ici réservés aux envoyeurs de même type sur les liens qui les desservent individuellement pour leurs émissions.

Un même destinataire, tel 27Z, est susceptible de recevoir plusieurs demandes d'accès, telles REQ1 et REQ2, provenant simultanément d'envoyeurs distincts, tels 26A et 26B, par des liens différents, tels dans ce cas 28AZ et 28BZ.

Chaque destinataire exerce une surveillance pour détecter les demandes d'accès qui lui sont envoyées, simultanément ou non, et choisit l'un d'entre eux selon des critères, qui ne seront pas évoqués ici.

Le choix effectué par un destinataire, tel 27Z, se traduit par l'envoi d'une autorisation d'émettre, telle ACK1, dans le canal temporel qui lui est réservé en fonction de son type sur le lien lui permettant d'émettre vers l'envoyeur choisi, soit sur le lien 29ZA associé au lien 28AZ dans la liaison de type L1 qu'ils composent pour l'envoyeur 26A, dans l'exemple choisi.

L'envoi d'une autorisation d'émettre à un envoyeur entraîne l'émission par ce dernier de l'information, pour laquelle il a préalablement envoyé une demande d'accès, cet envoi s'effectue par le canal temporel utilisé pour la demande d'accès et sur le même lien que celle-ci, soit le lien 28AZ dans le cas de la demande REQ1.

Chaque information est préférablement mise sous forme de message.

Chacun de ces messages, tel MSG1, comporte par exemple un octet fanion, suivi d'un octet donnant la longueur en octets du message, lui-même suivi des octets de données de ce message, l'ensemble étant transmis sur le lien concerné, soit ici 28AZ, par blocs de "m" octets au cours de trames successives, le nombre "m" étant par exemple égal à 4.

Dans l'exemple présenté, les messages d'envoyeurs différents, tels MSG1 et MSG2, vers un même destinataire, tel 27Z, sont successivement transmis à ce dernier au fur et à mesure de ses disponibilités, chaque envoyeur maintenant sa demande d'accès, telle REQ2, par réémission des octets correspondants tant qu'il n'a pas reçu l'autorisation d'émission attendue. Il est prévu de diffuser une même requête et/ou un même message vers tous les destinataires susceptibles d'être concernés dans le sous-réseau.

Dans la mesure où le procédé défini ci-dessus est asymétrique, il est possible que deux unités constitutives de l'installation qui sont reliées par une même liaison de type L1, puissent simultanément tenter d'agir chacune en tant qu'envoyeur vis-à-vis de l'autre.

Toutefois dans la mesure où l'une et l'autre n'ont pas même type, elles n'utilisent pas les mêmes intervalles de temps de trame pour leurs canaux temporels respectifs et nécessairement l'une précédera l'autre dans l'envoi de sa demande d'accès. Ceci permet à cette autre d'envoyer une autorisation d'émettre et conduit à ce que ladite autre ne reçoive pas l'autorisation d'émettre qu'elle attend, avant qu'elle n'ait totalement reçu le message qui lui est destiné.

Les liaisons L4 sont gérées de manière différente des liaisons L1 dans la mesure où il n'y a pas de procédure de demande d'accès prévue pour un transfert d'information par l'intermédiaire d'un des "p-m" canaux disponibles sur chacun des liens de sens inverse d'une liaison L4, ceux-ci étant préférablement attribués de manière permanente aux différents émetteurs rattachés aux deux coupleurs desservis par cette liaison.

Dans une forme de réalisation, ces émetteurs assurent une émission permanente sur le ou les canaux temporels qui leur sont respectivement attribués sur un lien, les octets ainsi transmis correspondant soit à une information utile, soit à du remplissage en l'absence d'information. Ces émetteurs sont par exemple les cofidecs des terminaux rattachés aux coupleurs desservis par la liaison 4 considérée.

Les liaisons multiplexes temporelles LMA à LMQ - figure 4 -, destinées à relier des interfaces de raccordement, tel 01, ou des circuits spécialisés, tel 9, à un circuit de communication 4 dans une unité constitutive d'installation selon l'invention, sont également structurées de manière spécifique.

Dans une forme de réalisation destinée à un coupleur d'interface standard tel que 2F, comportant un circuit de communication 4 doté d'interfaces de raccordement pour terminaux numériques de télécommunications, les interfaces de raccordement sont reliées au circuit de communication 4 du coupleur par des liaisons multiplexes temporelles, telle LMA, exploitées de manière particulière.

Les octets émanant d'un terminal numérique sont transmis à l'interface de raccordement qui le dessert sur un lien temporel, tel que LTS -figure 4 -, selon l'agencement montré en figure 8.

Ce lien LTS est supposé régi par une trame dont la période, égale à "T", est de 125 µs et où chaque terminal dispose d'une suite déterminée de "v" canaux temporels successifs pris parmi "r" par trame sur ce lien, soit, dans l'exemple déjà évoqué, à une suite de quatre octets, "v" étant choisi égal à "m". Ces octets se répartissent alors respectivement en deux octets B1 et B2 de canaux B différents, un octet de signalisation SIG entre terminal et coupleur et un octet de signalisation D, pour signalisation de type LAP-D, selon le CCITT, entre le terminal et le reste du réseau, de type RNIS, dont fait partie l'installation qui le comporte.

Comme il est connu, les canaux de type B sont exploités notamment pour la téléphonie proprement dite, la transmission de données par voie téléphonique à l'aide de modems, la télécopie ...

Les canaux de type D sont exploités pour la signalisation des terminaux d'abonné et éventuellement pour le transfert de données à faible débit ou à caractère sporadique vers ou à partir de ces terminaux.

L'agencement défini ci-dessus est également exploité sous forme simplifiée pour les terminaux ou postes n'exigeant qu'un nombre de canaux inférieur à "v".

Les octets reçus par une interface de raccordement, en provenance de terminaux ou postes desservis par des liens régis selon l'agencement défini ci-dessus et à des fins de transmission, sont émis sur les liens, tels LMAE à LMAS, des liaisons multiplexes reliant l'interface de raccordement concerné au circuit de communication de l'unité qui les comporte.

A cet effet une structure de trame particulière est mise en oeuvre pour les liaisons multiplexes temporelles LMA à LMQ pour tenir compte de la structure choisie pour les liaisons L1 et L4, ceci étant montré en liaison avec la figure 9.

Pour tenir compte du fait que "m" canaux temporels des liaisons L1 ou L4 positionnés les uns en-tête, les autres en milieu de trame sont systématiquement réservés aux liaisons entre coupleurs et unités de commande et ne sont pas disponibles pour les transferts d'octets issus des interfaces de raccordement de postes ou terminaux, il est prévu d'émettre en tête de trame sur les liens, entre interfaces de raccordement et circuit de communication, tels que LMAE,..., LMQE, les octets de signalisation SIG, ainsi qu'on le voit sur la figure 9, puisque ceux-ci ne sont pas transmis plus avant.

Dans l'exemple envisagé pour une interface de raccordement telle que définie ci-dessus, disposant de quatre liens pour son raccordement au circuit de communication du coupleur qui la comporte, et desservant huit terminaux avec chacun de ces liens, les octets de signalisation SIG et D du dernier des huit terminaux desservis par un lien sont ainsi transmis en tête de trame avant les octets B1, B2, SIG et D du premier terminal auxquels succèdent par ordre les octets des autres terminaux, jusqu'aux deux octets B1 et B2 du dernier d'entre eux, en fin de trame.

Ceci conduit à un agencement sur les liaisons L1 et L4, tel que présenté en figure 10, selon cet agencement et en accord avec les agencements précédents, les quatre premiers intervalles de temps ITO - IT3 en tête de trame sont réservés aux transferts d'octets de signalisation, ici référencés SIC, à partir d'un circuit de communication 4 d'unité de commande, vers une autre unité constitutive à laquelle cette unité de commande est reliée en point-à-point; en phase d'exploitation, ils assurent le transfert d'octets caractéristiques de non-usage, ici référencés NOP, lorsque l'unité qui les émet n'est pas une unité de commande.

Les quatre intervalles de temps IT4 - IT7, suivants, sont exploitables par un circuit de communication 4 d'une unité constitutive pour le transfert de quatre octets provenant chacun d'un premier canal de signalisation de type D d'un des quatre liens entrants LMAE à LMQE des liaisons multiplexes temporelles LMA à LMQ reliées à ce circuit de communication 4; des octets caractéristiques de non-usage NOP sont substitués à ces octets de canaux de type D lorsque ceux-ci ne sont pas exploités au niveau de l'unité dont fait partie le circuit de communication 4 considéré.

Les quatre intervalles de temps IT8 - IT11, suivants, sont prévus pour être exploités par un circuit de communication 4 pour le transfert de quatre octets provenant chacun d'un premier des canaux B, soit par exemple 1B1, d'un des quatre liens entrants LMAE - LMQE reliés à ce circuit de communication 4. Il en est de même pour les quatre intervalles de temps IT12 - IT15, suivants, affectés aux quatre premiers canaux 1B2 associés aux quatre canaux 1B1 considérés ci-dessus, étant rappelé qu'un même terminal d'abonné ou circuit spécialisé auquel est reliée une liaison multiplexe temporelle dispose éventuellement de deux canaux B1, B2 et de deux canaux de signalisation D et SIG - fig 8 -.

Les intervalles de temps IT16 - IT27, suivants ont une affectation reproduisant celle des octets IT4 -IT15 où les quatre premiers intervalles IT16 - IT19 sont affectés aux octets 2D du second des canaux B des liens entrants LMAE - LMQE et où les intervalles de temps IT20 - IT27 sont affectés, les quatre premiers aux octets des seconds canaux 2B1 et les seconds aux octets des canaux 2B2, non figurés, des liens entrants évoqués plus haut.

Dans l'exemple envisagé, deux grands groupes composés de cinq sous-groupes de douze intervalles de temps sont ainsi susceptibles d'être affectés aux transferts de type d'octets de canaux D, B1, B2 provenant à un circuit de communication, via les quatre liens entrants LMAE - LMAQ qui sont reliés à lui, à des fins de transmission sur un lien, tel par exemple 29ZA, de liaison point-à-point. Entre deux grands groupes successifs au cours des trames s'insèrent deux petits groupes de quatre intervalles de temps composés respectivement de quatre intervalles de temps IT0 - IT3 réservés aux émissions d'octets de signalisation par une unité de commande, en tête de trame, vers une autre unité et d'autre part de quatre intervalles de temps IT64 - IT67 réservés aux émissions d'octets de signalisation en sens inverse.

Ces octets de signalisation sont par exemple du type message lorsqu'ils sont liés à l'usage d'un terminal RNIS ou du type commande ou report, en mode bit à changement d'état, suivant dans ce dernier cas qu'ils proviennent d'une unité de commande ou d'un terminal.

Comme indiqué plus haut, les intervalles de temps non exploités sur un lien donné transmettent des octets caractéristiques de non-usage NOP, en l'absence d'autre information.

## Revendications

1. Agencement de communication entre unités, supports de mode circuit, interconnectées en point-à-point du coeur d'une installation de communication composée d'au plus "n" unités, où les liaisons point-à-point (L1, L4) entre unités (1, 2, 3) forment un sous-réseau de communication où toutes les liaisons sont structurées physiquement et régies temporellement de manière identique, chaque unité prévue pour être reliée à des liaisons point-à-point pour son interconnexion à au moins une autre unité étant aussi prévue pour être reliée à des liaisons multiplexes temporelles de desserte de postes et/ou terminaux de communication, de manière à permettre tant la diffusion d'informations vers au moins une autre unité que la commutation d'octets parvenant par les liaisons point-à-point, toute unité du coeur d'installation comportant un circuit de communication (4), de type circuit intégré, qui est identique pour toutes les unités quel qu'en soit le type, unité de commande, unité auxiliaire ou coupleur pour postes téléphoniques et/ou terminaux de communication, chaque circuit de communication comportant "n" ports de raccordement (P1, ..., Pn) pour liaison point-à-point et "q" ports (PA, ..., PQ) pour liaison multiplexe temporelle (LMA, ..., LMQ) de desserte des postes et/ou terminaux (04, ..., 07) rattachés à l'unité comportant le circuit de communication considéré et des éventuels circuits spécialisés (9, 10) concernés de cette unité, caractérisé en ce que ledit circuit de communication est agencé pour assurer, sous le contrôle d'un microprocesseur (8) associé, d'une part, la diffusion des informations, à destination d'au moins une autre unité, qui sont susceptibles d'être transmises au cours de chaque trame de durée "T" sous forme d'octets par les "r" canaux temporels de liens entrants (LMAE, ..., LMQE) de chacune des "q" liaisons multiplexes temporelles reliées à lui, vers éventuellement ses "n" ports de raccordement de liaison point-à-point et assurant éventuellement, d'autre part, la commutation des octets parvenant par au moins certains de "r × q" canaux temporels quelconques sélectionnés parmi les "p × n" canaux temporels susceptibles de lui être fournis, par les liaisons point-à-point au cours d'une trame de durée "T".

2. Agencement de communication selon la revendication 1, caractérisé en ce que chaque circuit de communication, de type intégré, comporte une interface d'entrée (12) assurant une mise en phase par rapport aux signaux fournis par un circuit d'horloge interne à partir des signaux d'horloge et de synchronisation fournis par une des liaisons auxquelles le circuit de communication est relié dans l'installation, ainsi qu'une conversion série-parallèle des octets reçus des liaisons point-à-point pour être transmis à un module de commutation concentrateur (16) permettant la sélection des octets parvenant par "r × q" canaux temporels quelconques parmi "p × n" canaux temporels possibles.

3. Agencement de communication selon la revendication 2, caractérisé en ce que le module de commutation (16) d'un circuit de communication est relié, d'une part, à une interface de sortie (15) pour le transfert d'octets transmis par des canaux temporels de liaisons point-à-point à destination des liens sortants (LMAS, ..., LMQS) des liaisons multiplexes temporelles de desserte des postes et/ou terminaux (04, ..., 07) rattachés à l'unité comportant ledit circuit de communication, d'autre part, à un automate de traitement de signalisation (17) traitant les octets de message provenant, via une des liaisons point-à-point, d'une unité de commande de l'installation à destination de l'unité qui comporte le circuit de commutation considéré.

4. Agencement de communication selon la revendication 3, caractérisé en ce qu'il comporte un circuit de communication, avec un automate de transmission de message de commande (20) relié à l'interface de sortie (15) d'accès aux liens sortants de liaisons multiplexes temporelles, en parallèle avec le module de commutation pour permettre l'injection directe sur ces liens d'octets de message de commande par le microprocesseur (8) associé au circuit de communication considéré.

5. Agencement de communication selon la revendication 1, caractérisé en ce que chaque circuit de communication, de type intégré, comporte une interface de sortie (14) donnant éventuellement accès en parallèle aux "n" ports de raccordement de liaison point-à-point du circuit qui la comporte, la dite interface étant reliée d'une part à une interface d'entrée (13) à laquelle sont reliées les "q" liens entrants (LMAE, ..., LMQE) des liaisons multiplexes temporelles de desserte des postes et/ou terminaux (04, 07) rattachés à l'unité comportant ledit circuit de communication, pour des transferts d'octets, notamment de paroles ou de données fournis par ces liens, d'autre part à un automate de traitement de signalisation (23) produisant des messages pour le microprocesseur (8) associé en vue de leur transmission à une unité de commande (1) de l'installation.

6. Agencement de communication selon la revendication 5, caractérisé en ce que l'interface de sortie (14) assure un stockage temporaire des octets à transmettre permettant que ces octets soient émis au cours d'intervalles de temps de canaux temporels prédéterminés sur les liens sortants des liaisons point-à-point (L1, L4), reliées aux "p" ports du circuit de communication dont cette interface de sortie fait partie, sous le contrôle du circuit d'horloge de ce circuit de communication.

7. Agencement de communication selon les revendications 4 et 5, caractérisé en ce qu'il comporte un circuit de communication avec un automate de réception de message de commande (22) pour prétraiter pour le microprocesseur (8) associé, les signalisations de type message provenant, de terminaux rattachés à l'unité qui comporte ce circuit de communication, via les liens entrants (LMAE, ..., LMAS) et l'interface d'entrée (13) qui les dessert.

8. Agencement de communication selon les revendications 4 et 5, caractérisé en ce qu'il comporte un circuit de communication avec d'une part un automate de commande par état (19) relié en entrée du module de commutation (16) du circuit en parallèle avec l'interface d'entrée (12) desservant les liaisons point-à-point, pour la commande de terminaux en mode par état et, d'autre part, un automate de prétraitement d'états (21) relié en sortie de l'interface (13) à laquelle aboutissent les liens entrants (LMAE, ..., LMAS) reliés aux circuit de communication considéré, pour prétraiter pour le microprocesseur (8) associé les octets de mode état reçus de ces liens.

9. Procédé de communication entre unités, supports de mode circuit interconnectées en point-à-point, du coeur d'une installation de communication composée d'au plus "n" unités où les liaisons point-à-point (L1, L4) entre unités (1, 2, 3) forment un sous-réseau de communication où toutes les liaisons sont structurées physiquement et régies temporellement de manière identique, chaque unité, prévue pour être reliée à des liaisons point-à-point pour son interconnexion à au moins une autre unité et à des liaisons multiplexes temporelles de desserte de postes et/ou terminaux de communication, comportant un circuit de communication, de type circuit intégré, qui est identique pour toutes les unités quel qu'en soit le type, unité de commande, unité auxiliaire ou coupleur pour postes téléphoniques et/ou terminaux de communication, chaque circuit de communication comportant "n" ports de raccordement (P1, ..., Pn) pour liaison point-à-point et "q" ports (PA, ..., PQ) pour liaison multiplexe temporelle (LMA, ..., LMQ) de desserte des postes et/ou terminaux (04, ..., 07), caractérisé en ce que chaque trame successive de durée "T", identique pour les liaisons point-à-point (L1, L4) entre unités, supports de mode circuit, et pour les liaisons multiplexes temporelles (LMA, ..., LMQ) de desserte des postes et/ou terminaux en mode circuit rattachés à l'installation au niveau d'une unité ou de desserte de circuits spécialisés correspondants, est identiquement divisée en "r x q" intervalles de temps égaux sur chacune des liaisons point-à-point (L1 ou L4) reliant deux unités supports de mode circuit de l'installation, "r" étant égal au nombre de canaux temporels sur une liaison multiplexe temporelle (LMA, ..., LMQ) et "q" étant le nombre de ces liaisons multiplexes temporelles par circuit de communication.

10. Procédé de communication selon la revendication 9, caractérisé en ce que tout envoi d'information d'une unité de commande (1) de l'installation à un coupleur (2A ..., 2F), ou réciproquement, par une liaison point-à-point est précédé d'une demande (REQ1) d'accès émise par le demandeur au destinataire et est dépendant de la réception d'une autorisation d'émettre ( ACK1) envoyée par le destinataire au demandeur lorsque celui-ci est prêt à recevoir.

11. Procédé de communication selon la revendication 10, caractérisé en ce que l'envoi d'une information d'une unité de commande (1) de l'installation à un coupleur (2A, ..., 2F), ou réciproquement, par une liaison point-à-point s'effectue sous la forme d'un message composé d'une suite d'octets transmis par blocs dans un même canal temporel au cours de trames successives, ledit message comportant un octet fanion, un octet donnant la longueur du message et les octets d'informations.

12. Procédé de communication selon la revendication 9, caractérisé en ce que les "p" = r × q" canaux temporels correspondant aux "r × q" intervalles de temps de trame sur chaque liaison point-à-point (L1 ou L4) sont attribués de manière que "m" d'entre eux soient réservés aux transferts de signalisation entre unité(s) de commande (1) et coupleurs (2) ou aux transferts de signalisation en sens inverse, les "p-m" canaux temporels restants étant affectés aux transferts d'informations.

13. Procédé de communication selon la revendication 12, caractérisé en ce que les "m/2" premiers intervalles de temps de chaque trame sont réservés aux transferts de signalisation entre unité(s) de commande (1) et coupleurs (2) de l'installation, alors que les "m/2" premiers intervalles de temps après chaque demi-trame sont affectés aux transferts de signalisation en sens inverse entre coupleurs et unité(s) de commande.

14. Procédé de communication selon la revendication 13, caractérisé en ce que les "q" canaux temporels correspondant aux "q" intervalles de temps sur une liaison multiplexe temporelle (LMA, ..., LMQ), sont attribués quatre par quatre à des postes, terminaux ou circuits spécialisés qui, travaillant en mode circuit, sont rattachés par une telle liaison à un circuit de communication, deux premiers canaux (B1, B2) étant affectés au transfert de parole ou de données, à partir d'un poste, terminal ou circuit spécialisé, sur chacun des deux liens unidirectionnels inverses de cette liaison, les deux suivants étant affectés l'un au transfert de signalisation entre le poste, terminal ou circuit spécialisé considéré et le coupleur (2) auquel il est rattaché, ou en sens inverse, l'autre à l'envoi de signalisation normalisée LAP-D entre ce poste, terminal ou circuit spécialisé et le reste d'un réseau de communication dont fait partie l'installation.

15. Procédé de communication selon la revendication 14,
caractérisé en ce que la trame sur une liaison point-à-point est structurée en deux grands groupes (IT4 à IT63 et IT68 à IT127) de cinq sous-groupes de douze intervalles de temps successifs et en deux petits groupes de quatre intervalles de temps successifs, chaque sous-groupe ayant ses douze intervalles de temps affectés aux transferts d'octets de canaux (D, B1, B2) provenant à un circuit de communication, via les liens entrants reliés à ce circuit, à raison de quatre intervalles successifs pour quatre octets provenant chacun d'un canal de même rang des quatre liens entrants, les deux petits groupes étant respectivement affectés aux transferts d'octets de signalisation (SIC), l'un (ITO à IT3) à partir d'un circuit de communication d'unité de commande vers une autre unité et l'autre (IT64 à IT67) en sens inverse, chacun de ces deux petits groupes étant de plus inséré entre deux grands groupes successifs, au cours des trames successives.

## Patentansprüche

1. Anordnung zum Verkehr zwischen Einheiten im Schaltungsmodus, die über Punkt-zu-Punkt-Verbindungen des Kerns einer Nachrichtenanlage miteinander verbunden sind, welche höchsten n Einheiten enthält, wobei die Punkt-zu-Punkt-Verbindungen (L1, L4) zwischen Einheiten (1, 2, 3) ein Unternachrichtennetz bilden, in dem alle Verbindungen in gleicher Weise physisch strukturiert und zeitlich gesteuert sind, wobei jede Einheit, die an Punkt-zu-Punkt-Verbindungen für den Anschluß an mindestens eine andere Einheit angeschlossen werden soll, auch an Zeitmultiplexverbindungen zur Bedienung von Stationen und/oder Nachrichtenendgeräten angeschlossen werden kann, so daß sowohl die Verteilung von Informationen an mindestens eine andere Einheit als auch die Weiterschaltung von Bytes möglich ist, die über Punkt-zu-Punkt-Verbindungen ankommen, wobei jede Einheit des Kerns der Anlage eine Vermittlungsschaltung (4) in Form eines integrierten Schaltkreises enthält, die für alle Einheiten unabhängig von deren Typ, nämlich Steuereinheit, Hilfseinheit oder Koppler für Telefonstationen und/oder Nachrichtenendgeräte dieselbe ist und jede Vermittlungsschaltung n Anschlußports (P1, ..., Pn) für die Punkt-zu-Punkt-Verbindung und q Ports (PA, ..., PQ) für eine Zeitmultiplexverbindung (LMA, ..., LMQ) zur Bedienung der an die Einheit mit der betrachteten Vermittlungsschaltung und eventuell von dieser Einheit betroffenen spezialisierten Schaltungen (9, 10) enthält, dadurch gekennzeichnet, daß die Vermittlungsschaltung so ausgebildet ist, daß sie unter Steuerung durch einen zugeordneten Mikroprozessor (8) einerseits die Verteilung der Informationen an mindestens eine andere Einheit, die während jedes Rahmens der Dauer T in Form von Bytes auf den r Zeitkanälen von ankommenden Richtungsverbindungen (LMAE, ..., LMQE) jeder der q an diese Schaltung angeschlossenen Zeitmultiplexverbindungen in Richtung ggf. auf deren n Anschlußports der Punkt-zu-Punkt-Verbindung gewährleistet, und daß sie ggf. andererseits die Durchschaltung der auf mindestens bestimmten Zeitkanälen der r·q beliebig unter den p·n möglichen und zur Verfügung bestellten Zeitkanälen ausgewählten Zeitkanäle über die Punkt-zu-Punkt-Verbindungen während eines Rahmens der Dauer T bewirkt.

2. Nachrichteneinrichtung nach Anspruch 1, dadurch gekennzeichnet, daß jede Vermittlungsschaltung in Form eines integrierten Schaltkreises eine Eingangsschnittstelle (12) enthält, die eine Phasenanpassung bezüglich der von einer inneren Taktschaltung ausgehend von Takt- und Synchronisationssignalen gelieferten Signale bewirkt, wobei die Taktsignale von einer der Verbindungen geliefert wird, an die die Vermittlungsschaltung in der Anlage angeschlossen ist, und daß jede Vermittlungsschaltung eine Serien-Parallel-Umwandlung der auf den Punkt-zu-Punkt-Verbindungen empfangenen Bytes durchführt und sie an einen Konzentrationsschaltmodul (16) weitergibt, in dem eine Auswahl der auf den r·q beliebig unter den p·n möglichen Zeitkanälen ausgewählten Zeitkanälen ankommenden Bytes ermöglicht wird.

3. Nachrichteneinrichtung nach Anspruch 2, dadurch gekennzeichnet, daß der Schaltmodul (16) einer Vermittlungsschaltung einerseits an eine Ausgangsschnittstelle (15) für den Transfer von auf Zeitkanälen von Punkt-zu-Punkt-Verbindungen übertragenen und für ausgehende Richtungsverbindungen (LMAS, ..., LMQS) der Zeitmultiplexverbindungen bestimmten Bytes zur Bedienung der an die diese Vermittlungsschaltung enthaltende Einheit angeschlossenen Stationen und/oder Endgeräte (04, ..., 07), und andererseits an einen Signalisations-Verarbeitungsautomaten (17) angeschlossen ist, der die Nachrichtenbytes behandelt, die über eine der Punkt-zu-Punkt-Verbindungen einer Steuereinheit der Anlage ankommen und für die Einheit bestimmt sind, die die betreffende Vermittlungsschaltung enthält.

4. Nachrichteneinrichtung nach Anspruch 3, dadurch gekennzeichnet, daß sie eine Vermittlungsschaltung mit einem Automaten (20) zur Übertragung einer Steuernachricht enthält, der an die Ausgangsschnittstelle (15) angeschlossen ist, die Zugang zu den ausgehenden Richtungsverbindungen der Zeitmultiplexverbindungen hat, und zwar parallel mit dem Schaltmodul, um unmittelbar auf diese Richtungsverbindungen Bytes betreffend Steuernachrichten durch den Mikroprozessor (8) einzuspeisen, der der betreffenden Vermittlungsschaltung zugeordnet ist.

5. Nachrichteneinrichtung nach Anspruch 1, dadurch gekennzeichnet, daß jede Vermittlungsschaltung in Form eines integrierten Schaltkreises eine Ausgangsschnittstelle (14) enthält, die ggf. parallel Zugang zu den n Anschlußports der Punkt-zu-Punkt-Verbindung der Schaltung besitzt, die sie enthält, wobei diese Schnittstelle einerseits an eine Eingangsschnittstelle (13) angeschlossen ist, mit der die q ankommenden Richtungsverbindungen (LMAE, ..., LMQE) der Zeitmultiplexverbindungen zur Bedienung der Stationen und/oder Endgeräte (04, ..., 07) verbunden sind, die der die Vermittlungsschaltung enthaltenden Einheit für den Transfer von Bytes, insbesondere Sprachbytes oder Datenbytes, die von diesen Richtungsverbindungen geliefert werden, zugewiesen sind, und wobei andererseits diese Schnittstelle an einen Signalisations-Verarbeitungsautomaten (23) angeschlossen ist, der Nachrichten für den zugeordneten Mikroprozessor (8) für deren Übertragung an eine Steuereinheit (1) der Anlage erzeugt.

6. Nachrichteneinrichtung nach Anspruch 5, dadurch gekennzeichnet, daß die Ausgangsschnittstelle (14) die zu übertragenden Bytes vorübergehend speichert, so daß die Bytes während vorbestimmten Zeitintervallen von Zeitkanälen auf diese ausgehenden Richtungsverbindungen der Punkt-zu-Punkt-Verbindungen (L1, L4) ausgesendet werden, die an die p Ports der Vermittlungsschaltung angeschlossen sind, zu der diese Ausgangsschnittstelle gehört, und zwar unter Steuerung durch die Taktschaltung dieser Vermittlungsschaltung.

7. Nachrichteneinrichtung nach den Ansprüchen 4 und 5, dadurch gekennzeichnet, daß sie eine Vermittlungsschaltung mit einem Automaten (22) zum Empfang einer Steuernachricht enthält, um für den zugeordneten Mikroprozessor die Signalisationen vom Nachrichtentyp vorzuverarbeiten, die von an die diese Vermittlungsschaltung enthaltende Einheit angeschlossenen Endgeräten stammen, und zwar über die ankommenden Richtungsverbindungen (LMAE, ..., LMAS) und die sie bedienende Eingangsschnittstelle (13).

8. Nachrichteneinrichtung nach den Ansprüchen 4 und 5, dadurch gekennzeichnet, daß sie eine Vermittlungsschaltung enthält, zu der einerseits ein Zustandssteuerautomat (19), der an den Eingang des Schaltmoduls (16) der Schaltung parallel mit der Eingangsschnittstelle (12) angeschlossen ist, die diese Punkt-zu-Punkt-Verbindungen bedient, um Endgeräte im Zustandsmodus zu steuern, und andererseits ein Automat (21) zur Vorverarbeitung von Zuständen gehört, der an den Ausgang der Schnittstelle (13) angeschlossen ist, an der die ankommenden Richtungsverbindungen (LMAE, ..., LMAS) münden, die an die betreffende Vermittlungsschaltung angeschlossen sind, um für den zugeordneten Mikroprozessor (8) die Bytes im Zustandsmodus vorzuverarbeiten, die auf diesen Richtungsverbindungen empfangen werden.

9. Nachrichtenverfahren zum Verkehr zwischen Einheiten im Schaltungsmodus, die über eine Punkt-zu-Punkt-Verbindung des Kerns einer Nachrichtenanlage miteinander verbunden sind, welche höchsten n Einheiten enthält, wobei die Punkt-zu-Punkt-Verbindungen (L1, L4) zwischen Einheiten (1, 2, 3) ein Unternachrichtennetz bilden, in dem alle Verbindungen in gleicher Weise physisch strukturiert und zeitlich gesteuert sind, wobei jede Einheit, die an Punkt-zu-Punkt-Verbindungen für den Anschluß an mindestens eine andere Einheit und an Zeitmultiplexverbindungen zur Bedienung von Stationen und/oder Nachrichtenendgeräten angeschlossen werden soll, eine Vermittlungsschaltung in Form eines integrierten Schaltkreises enthält, die für alle Einheiten unabhängig von deren Typ, nämlich Steuereinheit, Hilfseinheit oder Koppler für Telefonstationen und/oder Nachrichtenendgeräte dieselbe ist, und wobei jede Vermittlungsschaltung n Anschlußports (P1, ..., Pn) für die Punkt-zu-Punkt-Verbindung und q Ports (PA, ..., PQ) für eine Zeitmultiplexverbindung (LMA, ..., LMQ) zur Bedienung der Stationen und/oder Endgeräte (04, ... 07) enthält, dadurch gekennzeichnet, daß jeder der aufeinanderfolgenden Rahmen der Dauer T, die für die Punkt-zu-Punkt-Verbindungen (L1, L4) zwischen Einheiten im Schaltungsmodus und für die Zeitmultiplexverbindungen (LMA, ..., LMQ) zur Bedienung der an die Einrichtung in Höhe einer Einheit angeschlossenen oder entsprechende spezialisierte Schaltungen bedienenden Stationen und/oder Endgeräte im Schaltungsmodus gleich sind, in gleicher Weise in r·q gleiche Zeitintervalle auf jeder der Punkt-zu-Punkt-Verbindungen (L1 oder L4) zwischen zwei Einheiten der Anlage im Schaltungsmodus unterteilt ist, wobei r der Zahl von Zeitkanälen auf einer Zeitmultiplexverbindung (LMA, ..., LMQ) gleicht und q die Zahl der Zeitmultiplexverbindungen je Vermittlungsschaltung angibt.

10. Nachrichtenverfahren nach Anspruch 9, dadurch gekennzeichnet, daß jeder Aussendung einer Information von einer Steuereinheit (1) der Anlage an einen Koppler (2A, ..., 2F) oder umgekehrt über eine Punkt-zu-Punkt-Verbindung eine Zugangsanfrage (REQ1) vorausgeht, die vom Sender an den Zielempfänger ausgesendet wird, und daß die Aussendung der Information vom Empfang einer Freigabe (ACK1) abhängt, die von dem Zielempfänger an den Sender übermittelt wird, wenn der Empfänger empfangsbereit ist.

11. Nachrichtenverfahren nach Anspruch 10, dadurch gekennzeichnet, daß die Aussendung einer Information durch eine Steuereinheit (1) der Anlage an einen Koppler (2A, ..., 2F) oder umgekehrt über eine Punkt-zu-Punkt-Verbindung in Form einer Nachricht erfolgt, die aus einer Folge von in Blöcken in einem gleichen Zeitkanal während aufeinanderfolgender Rahmen übertragenen Bytes gebildet wird und ein Fanion-Byte, ein Byte, das die Länge der Nachricht angibt und die Informationsbytes enthält.

12. Nachrichtenverfahren nach Anspruch 9, dadurch gekennzeichnet, daß die p = r·q den r·q Rahmenzeitintervallen auf jeder Punkt-zu-Punkt-Verbindung (L1 oder L4) entsprechenden Zeitkanäle so zugeordnet sind, daß m von ihnen für den Signalisationstransfer zwischen mindestens einer Steuereinheit (1) und Kopplern (2) und für den Signalisationstransfer in umgekehrter Richtung reserviert sind, während die übrigen p-m Zeitkanäle der Informationsübertragung zugeordnet sind.

13. Nachrichtenverfahren nach Anspruch 12, dadurch gekennzeichnet, daß die m/2 ersten Zeitintervalle jedes Rahmens für den Signalisationstransfer zwischen mindestens einer Steuereinheit (1) und Kopplern (2) der Anlage reserviert sind, während die m/2 ersten Zeitintervalle nach jedem Halbrahmen dem Signalisationstransfer in umgekehrter Richtung zwischen den Kopplern und der mindestens einen Steuereinheit zugeordnet sind.

14. Nachrichtenverfahren nach Anspruch 13, dadurch gekennzeichnet, daß die q Zeitkanäle entsprechend den q Zeitintervallen auf einer Zeitmultiplexverbindung (LMA, ..., LMQ) in Gruppen von je vier den Stationen, Endgeräten oder spezialisierten Schaltungen zugeordnet sind, die im Schaltungsmodus arbeiten und über eine solche Verbindung an eine Vermittlungsschaltung angeschlossen sind, wobei die beiden ersten Kanäle (B1, B2) der Übertragung von Sprach- oder Datensignalen ausgehend von einer Station, einem Endgerät oder einer spezialisierten Schaltung auf jeder der beiden in unterschiedlichen Richtungen wirksamen Richtungsverbindungen dieser Verbindung zugeordnet sind, während von den beiden nächsten der eine dem Signalisationstransfer zwischen der betrachteten Station, dem Endgerät oder der spezialisierten Schaltung und dem Koppler (2), an den sie angeschlossen ist, bzw. in umgekehrter Richtung bestimmt ist und der andere für die Aussendung der standardisierten Signalisation LAP-D zwischen dieser Station, diesem Endgerät oder dieser spezialisierten Schaltung und dem Rest eines Nachrichtennetzes bestimmt ist, zu dem die Anlage gehört.

15. Nachrichtenverfahren nach Anspruch 14, dadurch gekennzeichnet, daß der Rahmen auf einer Punkt-zu-Punkt-Verbindung in zwei großen Gruppen (IT4 bis IT63 und IT68 bis IT127) bestehend aus je fünf Untergruppen von zwölf aufeinanderfolgenden Zeitintervallen und in zwei kleine Gruppen von je vier aufeinanderfolgenden Zeitintervallen strukturiert ist, wobei jede Untergruppe ihre zwölf Zeitintervalle dem Transfer von Bytes von Kanälen (D, B1, B2) zuordnet, die an einer Vermittlungsschaltung über die an diese Schaltung angeschlossenen ankommenden Richtungsverbindungen ankommen, und zwar je vier aufeinanderfolgende Zeitintervalle für vier Bytes, die von je einem Kanal gleichen Rangs der vier ankommenden Richtungsverbindungen stammen, während die beiden kleinen Gruppen dem Transfer von Signalisationsbytes (SIC) dienen, und zwar eine (IT0 bis IT3) ausgehend von einer Vermittlungsschaltung der Steuereinheit und an eine andere Einheit gerichtet, und die andere (IT64 bis IT67) in umgekehrter Richtung, wobei jede dieser beiden kleinen Gruppen außerdem zwischen zwei aufeinanderfolgende große Gruppen im Verlauf der aufeinanderfolgenden Rahmen eingefügt ist.

## Claims

1. System of communication between circuit mode core units interconnected by point-to-point circuits of a communication installation comprising at most "n" units, wherein the point-to-point circuits (L1, L4) between units (1, 2, 3) form a communication subnetwork in which all the circuits are structured and managed in exactly the same manner, each unit adapted to be connected to point-to-point circuits in order to interconnect it with at least one other unit being also adapted to be connected to time-division multiplex circuits serving telephones and/or communication terminals to enable broadcasting of information to at least one other unit and switching of bytes arriving via the point-to-point circuits, every installation core unit including an integrated circuit type communication circuit (4), which is identical for all the units regardless of their type: control unit, auxiliary unit or interface controller for telephones and/or communication terminals, each communication circuit comprising "n" point-to-point circuit ports (P1, ..., Pn) and "q" time-division multiplex circuit (LMA, LMQ) ports (PA, ..., PQ) serving telephones and/or terminals (04, ..., 07) connected to the unit comprising the communication circuit in question and possibly relevant dedicated circuits (9, 10) of that unit, characterised in that said communication circuit is adapted to handle under the control of an associated microprocessor (8), the broadcasting of information to at least one other unit during each frame of duration "T" in the form of bytes via the "r" channels of incoming links (LMAE, ..., LMQE) of each of "q" time-division multiplex circuits connected to it, possibly to its "n" point-to-point circuit ports and possibly handling switching of bytes arriving on at least some of any "r x q" channels selected from the "p x n" channels that can be supplied to it, by the point-to-point circuits during a frame of duration "T".

2. Communication system according to claim 1 characterised in that each integrated type communication circuit comprises an input interface (12) handling synchronisation relative to the signals supplied by an internal clock circuit based on clock and synchronisation signals supplied via one of the circuits to which the communication circuit is connected in the installation and serial-parallel conversion of bytes received from point-to-point circuits to be transmitted to a concentrator switching module (16) enabling selection of bytes from any "r x q" channels from "p x n" possible channels.

3. Communication system according to claim 2 characterised in that the switching module (16) of a communication circuit is connected to an output interface (15) to transfer bytes transmitted by channels of point-to-point circuits to outgoing links (LMAS, ..., LMQS) of time-division multiplex circuits serving telephones and/or terminals (04, ..., 07) connected to the unit comprising said communication circuit and to a signalling processor (17) for processing message bytes from a control unit of the installation received via one of the point-to-point circuits addressed to the unit which comprises the switching circuit in question.

4. Communication system according to claim 3 characterised in that it further comprises a communication circuit with a control message sender (20) connected to the output interface (15) providing access to the outgoing links of time-division multiplex circuits in parallel with the switching module to enable direct injection onto said links of control message bytes by the microprocessor (8) associated with the communication circuit in question.

5. Communication system according to claim 1 characterised in that each integrated type communication circuit comprises an output interface (14) possibly providing parallel access to the "n" point-to-point circuit ports of the circuit which comprises it, said interface being connected to an input interface (13) to which are connected the "q" incoming links (LMAE, ..., LMQE) of time-division multiplex circuits serving telephones and/or terminals (04, ..., 07) connected to the unit comprising said communication circuit to transfer bytes, in particular speech or data supplied by said links, and to a signalling processor (23) producing messages for the associated microprocessor (8) in order to send them to a control unit (1) of the installation.

6. Communication system according to claim 5 characterised in that the output interface (14) temporarily stores bytes to be sent so that said bytes can be sent during time slots of predetermined channels on the outgoing links of point-to-point circuits (L1, L4) connected to the "p" ports of the communication circuit of which said output interface is part under the control of the clock circuit of said communication circuit.

7. Communication system according to claim 4 and claim 5 characterised in that it comprises a communication circuit with a control message receiver (22) for preprocessing for the associated microprocessor (8) message type signalling from terminals connected to the unit which comprises said communication circuit via the incoming links (LMAE, ..., LMAS) and the input interface (13) which serves them.

8. Communication system according to claim 4 and claim 5 characterised in that it comprises a communication circuit with a state controller (19) connected to the input of the switching module (16) of the circuit in parallel with the input interface (12) serving the point-to-point circuits for state mode terminal control and to a state preprocessor (21) connected to the output of the interface (13) at which terminate the incoming links (LMAE, ..., LMAS) connected to the communication circuit in question for preprocessing for the associated microprocessor (8) the state mode bytes received from said links.

9. Method of communication between circuit mode core units interconnected by point-to-point circuits of a communication installation comprising at most "n" units, wherein the point-to-point circuits (L1, L4) between units (1, 2, 3) form a communication subnetwork in which all the circuits are structured and managed in exactly the same manner, each unit adapted to be connected to point-to-point circuits in order to interconnect it with at least one other unit and to time-division multiplex circuits serving telephones and/or communication terminals, including an integrated circuit type communication circuit, which is identical for all the units regardless of their type: control unit, auxiliary unit or interface controller for telephones and/or communication terminals, each communication circuit comprising "n" point-to-point circuit ports (P1, ..., Pn) and "q" time-division multiplex circuit (LMA, ..., LMQ) ports (PA, ..., PQ) serving telephones and/or terminals (04, ..., 07) characterised in that each successive frame of duration "T", the same for the circuit mode point-to-point circuits (L1, L4) between units and for the circuit mode time-division multiplex circuits (LMA, ..., LMQ) serving telephones and/or terminals connected to the installation at the level of a unit or serving respective dedicated special-purpose circuits, is identically subdivided into "r x q" equal time slots on each of the circuit mode point-to-point circuits (L1 or L4) connecting two units of the installation, "r" being equal to the number of channels on a time-division multiplex circuit (LMA, ..., LMQ) and "q" being equal to the number of said time division multiplex circuits per communication circuit.

10. Method of communication according to claim 9 characterised in that any sending of information from a control unit (1) of the installation to an interface controller (2A, ..., 2F) or vice versa over a point-to-point circuit is preceded by an access request (REQ1) sent by the originator to the recipient and is dependent on the reception of an authorisation to send (ACK1) sent by the recipient to the originator when it is ready to receive.

11. Method of communication according to claim 10 characterised in that the sending of information from a control unit (1) of the installation to an interface controller (2A, ..., 2F) or vice versa over a point-to-point circuit is in the form of a message made up of a series of bytes transmitted in blocks in a common channel during successive frames, said message comprising a flag byte, a byte giving the length of the message and the information bytes.

12. Method of communication according to claim 9 characterised in that the "p = r x q" channels respective to the "r x q" frame time slots on each point-to-point circuit (L1 or L4) are assigned in such a way that "m" of them are reserved to transferring signalling between control unit(s) (1) and interface controllers (2) or to transferring signalling in the opposite direction, the remaining "p-m" channels being assigned to transfer of information.

13. Method of communication according to claim 12 characterised in that the first "m/2" time slots of each frame are reserved for transferring signalling between control unit(s) (1) and interface controllers (2) of the installation and the first "m/2" time slots after each half-frame are assigned to transfer of signalling in the opposite direction between interface controllers and control unit(s).

14. Method of communication according to claim 13 characterised in that the "q" channels respective to the "q" time slots on a time-division multiplex circuit (LMA, ..., LMQ) are assigned four by four to circuit mode telephones, terminals or dedicated circuits connected by a circuit of this kind to a communication circuit, two first channels (B1, B2) being assigned to the transfer of speech or data from a telephone, terminal or dedicated circuit on each of two opposite direction unidirectional links of said circuit, the next two being assigned one to transfer of signalling between the telephone, terminal or dedicated circuit in question and the interface controller (2) to which it is connected, or in the opposite direction, and the other to the sending of standard LAP-D signalling between said telephone, terminal or dedicated circuit and the remainder of a communication network of which the installation is part.

15. Method of communication according to claim 14 characterised in that the frame on a point-to-point circuit is structured into two large groups (IT4 to IT63 and IT68 to IT127) each of five subgroups each of twelve consecutive time slots and into two small groups each of four consecutive time slots, each subgroup having its twelve time slots assigned to the transfer of bytes from channels (D, B1, B2) from a communication circuit via the incoming links connected to said circuit in the proportion of four successive time slots per four bytes each from a channel of the same rank of the four incoming links, the two small groups being respectively assigned to transfer of signalling bytes (SIC), one (IT0 to IT3) from a control unit communication circuit to another unit and the other (IT64 to IT67) in the opposite direction, each of said small groups being additionally inserted between two consecutive large groups in consecutive frames.
